Europäisches Patentamt

European Patent Office

Office européen des brevets

(11) Veröffentlichungsnummer: **0 458 091 A2**

## (12) EUROPÄISCHE PATENTANMELDUNG

(21) Anmeldenummer: 91106966.4

(22) Anmeldetag: 30.04.91

(51) Int. Cl.5: **A47J 43/08**, A47J 44/00

(30) Priorität: 23.05.90 DE 4016615

(43) Veröffentlichungstag der Anmeldung:
**27.11.91 Patentblatt 91/48**

(84) Benannte Vertragsstaaten:
**AT CH FR IT LI**

(71) Anmelder: **Messerschmidt, Wilfried**
**August Heisler Weg 6**
**W-7744 Köningsfeld(DE)**

(72) Erfinder: **Messerschmidt, Wilfried**
**August Heisler Weg 6**
**W-7744 Königsfeld(DE)**
Erfinder: **Messerschmidt, Ulrich**
**August Heisler Weg 6**
**W-7744 Königsfeld(DE)**

(74) Vertreter: **Neymeyer, Franz, Dipl.-Ing. (FH)**
**Haselweg 20**
**W-7730 Villingen 24(DE)**

(54) **Antriebsadapter für ein Vorsatzgerät von Küchenmaschinen.**

(57) Bei Antriebsadaptern zum Ankuppeln eines mit einem standardisierten Wellenkupplungsteil versehenen Vorsatzgerätes, dessen Vorsatzgehäuse mit ebenfalls standardisierten Kupplungselementen versehen ist, an Antriebsaggregate von Küchenmaschinen od. dgl., weisen diese jeweils dazu unterschiedliche, typenspezifische Wellenkupplungsteile und Kupplungsgegenelemente am Antriebsgehäuse auf. Ziel ist es einen Antriebsadapter zu schaffen, der bezüglich seiner typenspezifischen Kupplungselemente und Wellenkupplungsteile unterschiedlich kombinierbar ist. Erreicht wird das dadurch, daß in axialer Richtung ein Standardgehäuseteil (22) und ein Typengehäuseteil (24) zu einem Adaptergehäuse (44) zusammenfügbar sind, die beide jeweils auf der einen Axialseite mit Kupplungsgegenelementen (28, 30) versehen sind, welche mit den standardisierten Kupplungselementen des Vorsatzgehäuses formschlüssig in Eingriff bringbar sind, wobei der Standardgehäuseteil (22) auf der axialen Gegenseite Kupplungselemente (20) aufweist, die mit den standardisierten Kupplungselementen des Vorsatzgehäuses übereinstimmen, und wobei der Typengehäuseteil (24) auf der axialen Gegenseite Kupplungselemente (40) aufweist, die mit den typenspezifischen Kupplungsgegenelementen eines Antriebsaggregats in Eingriff bringbar sind und wobei ferner im Adaptergehäuse (44) ein Wellenadapter (38) mit passenden Kupplungs- und Gegenkupplungsteilen drehbar gelagert ist.

FIG. 11

Die Erfindung betrifft einen Antriebsadapter zum Ankuppeln eines mit einem standardisierten Wellenkupplungsteil versehenen Vorsatzgerätes, dessen Vorsatzgehäuse mit ebenfalls standardisierten Kupplungselementen versehen ist, an Antriebsaggregate von Küchenmaschinen od. dgl., die jeweils dazu unterschiedliche typenspezifische Wellenkupplungsteile und Kupplungselemente am Antriebsgehäuse aufweisen.

Das funktionsgerechte Ankuppeln eines Vorsatzgerätes, z.B. einer Flockenpresse, eines Fleischwolfs, einer Getreidemühle od. dgl. an das Antriebsaggregat einer Küchenmaschine oder eines anderen Haushaltgerätes mit elektrischem Antrieb, setzt voraus, daß sowohl die miteinander zu kuppelnden Wellen zueinander passende Wellenkupplungsteile aufweisen, als auch daß die miteinander zu verbindenden Gehäuse des Vorsatzgerätes einerseits und des Gehäuses des Antriebsaggregates andererseits mit zueinander passenden, zu einer festen Verbindung zusammenfügbaren Kupplungselemente und Kupplungsgegenelemente versehen sind.
Es ist jedoch bekannt, daß die einzelnen Küchenmaschinen bzw. Antriebsaggregate von Küchenmaschinen der unterschiedlichen Hersteller auch unterschiedliche Wellenkupplungsteile und Kupplungsgegenelemente an den Antriebsgehäusen aufweisen, so daß nur solche Anbaugeräte mit diesen Antriebsaggregaten funktionsgerecht verbunden und betrieben werden können, die passende Wellenkupplungsteile bzw. Kupplungselemente an ihrem Vorsatzgehäuse aufweisen.

Andererseits gibt es Hersteller von speziellen Vorsatzgeräten, wie z.B. Flockenpressen, Getreidemühlen u. dgl., die alle so gestaltet sind, daß sie an ein bezüglich seiner Kupplungselemente und seines Wellenkupplungsteiles standardisiertes Antriebsaggregat wahlweise angeschlossen werden können. Zudem kommt es vor, daß die Hersteller von Küchenmaschinen bei einem Hersteller von Vorsatzgeräten Vorsatzgeräte herstellen lassen, die an das Antriebsaggregat ihrer Küchenmaschine unmittelbar ankuppelbar sein sollen und zu diesem Zweck mit entsprechend typenspezifischen Kupplungselementen und einem Wellenkupplungsteil ausgerüstet werden müssen. Die so ausgerüsteten Vorsatzgeräte passen dann nur zu dem einen Küchenmaschinentyp. Sie sind weder an das standardisierte Antriebsaggregat des Vorsatzgeräteherstellers noch an Antriebsaggregate anderer Küchenmaschinentypen anschließbar.

Der Erfindung liegt die Aufgabe zu Grunde, einen Antriebsadapter der eingangs genannten Art zu schaffen, der bezüglich seiner typenspezifischen Kupplungsgegenelemente und Wellenkupplungsteile unterschiedlich kombinierbar ist und dessen typenspezifische Kupplungselemente wahlweise unmittelbar am Vorsatzgehäuse mit den standardisierten Kupplungselementen funktionsgerecht befestigbar sind.

Gelöst wird diese Aufgabe erfindungsgemäß durch zwei in axialer Richtung zu einem Adaptergehäuse zusammenfügbare Gehäuseteile, nämlich ein Standardgehäuseteil und ein Typengehäuseteil, die beide jeweils auf der einen Axialseite mit Kupplungsgegenelementen versehen sind, welche mit den standardisierten Kupplungselemente des Vorsatzgehäuses formschlüssig in Eingriff bringbar sind, wobei der Standardgehäuseteil auf der axialen Gegenseite Kupplungselemente aufweist, die mit den standardisierten Kupplungselementen des Vorsatzgerätes übereinstimmen und wobei der Typengehäuseteil auf der axialen Gegenseite Kupplungselemente aufweist, die mit den typenspezifischen Kupplungsgegenelementen eines Antriebsaggregats in Eingriff bringbar sind, und wobei ferner im Adaptergehäuse ein Wellenadapter mit passenden Kupplungs- und Gegenkupplungsteilen drehbar gelagert ist.

Mit einem so gestalteten Antriebsadapter kann nicht nur die Aufgabe auf vorteilhafte Weise gelöst werden, sondern es ist auch der zusätzliche Vorteil gegeben, daß er aus nur drei Teilen besteht, nämlich zwei Gehäuseteilen und einem Wellenadapter, und somit günstig herstellbar und leicht montierbar ist. Ein weiterer Vorteil ist darin zu sehen, daß mit dem einen Gehäuseteil, nämlich dem Standardgehäuseteil unterschiedliche Typengehäuseteile mit jeweils typenspezifischen Kupplungselementen und Wellenadaptern kombiniert werden können, die jeweils an bestimmte Küchenmaschinentypen bzw. Antriebsaggregate von bestimmten Küchenmaschinentypen passen, und es besteht die zusätzliche vorteilhafte Möglichkeit, die gemäß Anspruch 2 mehrfach vorhandenen unterschiedlichen Typengehäuseteile mit unterschiedlichen typenspezifischen Kupplungselementen unmittelbar an Stelle eines Standardgehäuseteils an das Vorsatzgehäuse mit den standardisierten Kupplungselementen zu montieren. Im letzteren Falle ist es dann allerdings erforderlich, aber ohne weiteres möglich, das Vorsatzgerät mit einem zum ausgewählten Typengehäuseteil passenden Wellenkupplungsteil zu versehen.

Durch die Ausgestaltung nach Anspruch 3 wird der erfindungsgemäße Antriebsadapter im zusammenmontierten Zustand handhabungssicher gemacht, indem sichergestellt wird, daß die beiden zusammengefügten Gehäuseteile nicht mehr, bzw. zumindest nicht mehr ohne weiteres voneinander gelöst werden können.

Durch die Ausgestaltung nach Anspruch 4 ist zugleich der Vorteil gegeben, daß die zur gegenseitigen Verriegelung der beiden zusammengefügten Gehäuseteile benutzten Regelelemente automatisch bei der Herstellung der Typengehäuseteile entstehen und daß durch diese Riegelelemente keine zusätzlichen Montagearbeiten und Befestigungsmittel erforderlich sind.

Durch die Ausgestaltung der Ansprüche 3 und 4 ist es aber auch möglich, ein unmittelbar an das Vorsatzgehäuse montiertes Typengehäuseteil unlösbar mit dem Vorsatzgehäuse zu verbinden, so daß dieses betreffende Vorsatzgerät unveränderbar für einen ganz bestimmten Küchenmaschinentyp bzw. Antriebsaggregatstyp adaptiert ist.

Durch die Ausgestaltung nach den Ansprüchen 5 und 6 ist eine einfache, leicht handhabbare und funktionssichere Einrichtung geschaffen, mit der es möglich ist, den Standardgehäuseteil am Vorsatzgehäuse gegen selbsttätiges Lösen zu sichern, diese Sicherung aber im Bedarfsfalle auf einfache Weise zu lösen, um einen aufgesetzten Antriebsadapter vom Vorsatzgerät abzunehmen.

Die Ansprüche 7 und 8 betreffen Ausgestaltungen, die insbesondere eine vorteilhafte Handhabung und eine einfache Herstellung ermöglichen.

Anhand der Zeichnung wird im folgenden die Erfindung näher erläutert. Es zeigt:

Fig. 1 ein Vorsatzgerät in Form einer Flockenpresse in Seitenansicht;

Fig. 2 die Ansicht II aus Fig. 1;

Fig. 3 einen Teilschnitt III-III aus Fig. 2;

Fig. 4 die gleiche Schnittdarstellung wie Fig. 3, nur ohne Kupplungswelle;

Fig. 5 eine Stirnansicht eines mit dem Adapterteil der Fig. 6 versehenen Vorsatzgerätes;

Fig. 6 eine teilweise geschnittene Seitenansicht eines an ein Vorsatzgerät montierten typenspezifischen Adapterteils;

Fig. 7 eine typenspezifischen Kupplungswelle mit einem dazugehörigen typenspezifischen Adapterteil;

Fig. 8 eine andere typenspezifische Kupplungswelle mit zugehörigem Adapterteil;

Fig. 9 drei zu einem Antriebsadapter zusammenfügbare Teile im Schnitt, nämlich einen Standardgehäuseteil, einen Typengehäuseteil und einen Kupplungsadapter;

Fig. 10 die drei Teile eines anderen Antriebsadapters im Schnitt, ebenfalls bestehend aus einem Standardgehäuseteil, einem Typengehäuseteil und einem Wellenadapter;

Fig. 11 die teilweise geschnittene Seitenansicht des zusammengefügten Antriebsadapters der Fig. 10;

Fig. 12 eine teilweise geschnittene Stirnansicht XII aus Fig. 11;

Fig. 13 eine Ansicht XIII aus den Fig. 7 bis 10;

Fig. 14 die Einzelteile eines manuell betätigbaren Sperriegels in Seitenansicht;

Fig. 15 einen Schnitt XV-XV aus Fig. 14.

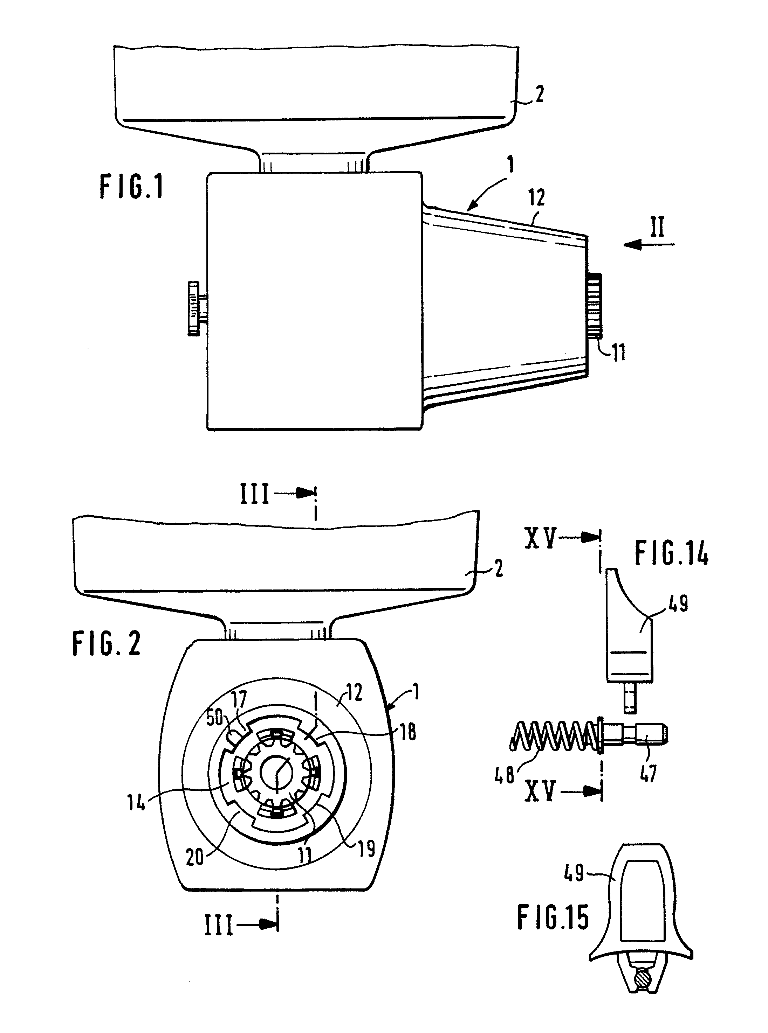

Bei dem in den Fig. 1 bis 5 dargestellten Ausführungsbeispiel eines Vorsatzgerätes handelt es sich um eine Flockenpresse mit einem mehrteiligen Vorsatzgehäuse 1 aus Kunststoff und einem trichterförmigen Zugabebecher 2. In einer rohrförmigen Nabe 3 eines inneren Stützteiles 4 des Vorsatzgehäuses 1 ist mittels eines Wälzlagers 5 die Gewindenabe 6 einer Preßwalze 7 gelagert, die es motorisch anzutreiben gilt. Zu diesem Zweck ist mittels eines Gewindeansatzes 8 eine Kupplungswelle 9 in die Gewindenabe 6 festsitzend eingeschraubt, die am gegenüberliegenden Ende mit einem aus Kunststoff bestehenden, standardisierten Wellenkupplungteil 10 drehfest verbunden ist. Dieser Wellenkupplungteil besitzt an seinem Umfang eine Kupplungsverzahnung 11 nach Art einer Vielkeilwelle und ist in einer einstückig an einem sich nach außen konisch verjüngenden, im Gehäuseteil 12 angeformten Gehäusenabe 13 des Vorsatzgehäuses 1 drehbar gelagert. Die Gehäusenabe 13 ist an einer nach innen versetzten Stirnwand 14 angeformt, die ihrerseits über einen zylindrischen Wandabschnitt 15 mit dem konischen Gehäuseteil 12 des Vorsatzgehäuses 1 verbunden ist. Dieser zylindrische Wandabschnitt 15 des Vorsatzgehäuses 1 bildet einen Aufnahmehohlraum 16 für adaptierfähige Gehäuseteile von Antriebsaggregaten, an welche das Vorsatzgerät zum Betrieb anbaubar sein soll. Um dabei einen Formschluß zu erreichen, ist der zylindrische Abschnitt 15 mit insgesamt vier am Innenumfang verteilt angeordneten Kupplungselementen 17, 18, 19 und 20 versehen, welche die Form von ringsektorartigen Radialvorsprüngen aufweisen und die durch rechteckförmige Radialnuten 21 hinterschnitten sind.

In der Stirnwand 14 sind außerdem Durchsecköffnungen zur Aufnahme von Rastzungen der Nabe 3 vorgesehen.

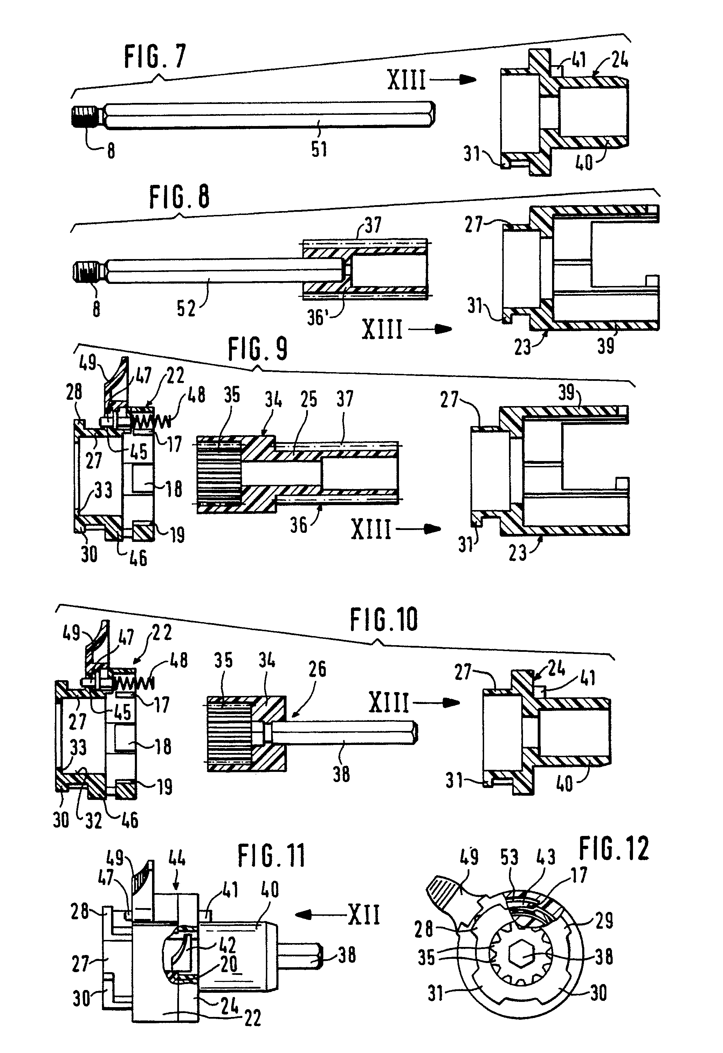

In den Fig. 9 bis 12 sind zwei unterschiedliche Antriebsadapter dargestellt, mit denen es möglich ist, das Vorsatzgerät an zwei unterschiedliche Küchenmaschinen bzw. Antriebsaggregate von Küchenmaschinen anzuschließen. In den Fig. 9 und 10 sind die Antriebsadapter jeweils in Explosionsdarstellung wiedergegeben. In beiden Fällen bestehen sie aus einem Standardgehäuseteil 22, einem Typengehäuseteil 23 bzw. 24 und einem Wellenadapter 25 bzw. 26. Die völlig gleich ausgebildeten Standardgehäuseteile 22 bestehen jeweils aus einem ringförmigen Körper, der auf seiner einen Axialseite an einem zylindrischen Ansatz 27 Kupplungsgegenelemente 28, 29, 30 und 31 in Form von L-förmigen Rippen angeordnet sind, welche im Zusammenwirken mit den Kupplungselementen 17 bis 20 des Vorsatzgehäuses 1 eine Renkverbindung nach Art eines Bajonettverschlußes bilden. Auf der axialen Gegenseite ist der Standardgehäuseteil 22 mit den gleichen Kupplungselementen 17, 18, 19 und 20 versehen, wie der zylindrische Wandabschnitt 15 des Vorsatzgehäuses 1.

Ein zylindrischer Hohlraum 32, der auf der nach außen gerichteten Stirnseite durch eine Ringwand 33 begrenzt ist, dient zur Aufnahme eines Gegenkupplungsteiles 34, der Bestandteil des Wellenadapters 25 bzw. 26 ist. Dieser Wellengegenkupplungsteil 34 weist einen stirnseitig offenen Hohlraum auf, der mit einer Kupplungsgegenverzahnung 35 versehen ist, welche die Kupplungsverzahnung 11 des Wellenkupplungsteiles 10 formschlüssig passend aufnehmen kann. Der Wellenadapter 25 besteht vollständig aus Kunststoff.Er weist an einer nabenartigen Verlängerung 36 eine nach Art einer Vielkeilwelle ausgebildete Außenverzahnung auf, welche den zweiten Wellenkupplungsteil darstellt, weist der Kupplungsadapter 26 als zweiten Kupplungsteil eine Sechskantwelle 38 auf, die in den Wellengegenkupplungsteil 34 drehsicher eingegossen ist.

Der Typengehäuseteil 23 weist ebenso wie der Typengehäuseteil 24 auf der dem Standardgehäuseteil 22 zugewandten Axialseite den gleichen zylindrischen Ansatz 27 mit den gleichen Kupplungsgegenelementen 28, 29, 30 und 31 auf, wie die Standardgehäuseteile 22, so daß sie jeweils mit den Kupplungselementen 17, 18, 19 und 20 dieser Standardgehäuseteile 22 nach Art einer Renkverbindung in Eingriff gebracht werden können. Diese Ausführungsform bedeutet aber auch, daß die Typengehäuseteile 23 und 24 auch unmittelbar mit den Kupplungselementen 17 bis 20 des Vorsatzgehäuses 1 in der gleichen Art in Eingriff gebracht werden können. Auf der gegenüberliegenden Axialseite weist der Typengehäuseteil 23 einen zylindrischen Rohransatz 39 auf, der an das Antriebsaggregat eines bestimmten Küchenmaschinentyps formschlüssig ansetzbar ist. Der Typengehäuseteil 24 hingegen ist mit einer Hohlnabe 40 und mit einer Drehsicherungsnase 41 versehen, die an das Antriebsaggregat eines anderen Küchenmaschinentyps passen.

In den Fig. 11 und 12 ist ein aus den Teilen der Fig. 10 zusammengebauter Antriebsadapter 44 dargestellt.

Wie aus den Fig. 11, 12 und 13 ersichtlich ist, sind die jeweils einstückig aus Kunststoff hergestellten Typengehäuseteile 23 und 24 jeweils mit zwei sich diametral gegenüberliegenden, axial federnden Riegelementen in Form von Sperrzungen 42 und 43 versehen, welche in Ausnehmungen 53 der Gehäusewand angeordnet und einstückig am Typengehäusteil 22, 23 angeformt sind und die jeweils zwei der Kupplungselemente 17, 18, 19 oder 20 des Standardgehäuseteils 22 sperrend hintergreifen, wenn die beiden Gehäuseteile 22 und 23 bzw. 22 und 24 formschlüssig miteinander in Eingriff gebracht sind. Diese Sperrzungen 42, 43 machen ein Lösen der beiden zusammengefügten Gehäuseteile 22 und 23 bzw. 22 und 24 unmöglich, so daß ein einmal zusammengefügtes Adaptergehäuse nicht mehr getrennt werden kann.

Um auch das gesamte zusammengefügte Adaptergehäuse 44 gegen selbstständiges Lösen sichern zu können, wenn es sich mit einem Vorsatzgehäuse 1 in Eingriff befindet, ist in dem Standardgehäuseteil 22 in einer Axialbohrung 45 der Ringwand 46 axial verschiebbar ein Sperriegel 47 gelagert, der unter dem Einfluß einer Druckfeder 48 steht und mittels eines radial vorspringenden Griffteiles 49 gegen die Wirkung der Druckfeder 48 betätigbar ist. Dieser Sperriegel 47 ist in Einriff bringbar mit einer stirnseitigen Ausnehmung 50 des Kupplungselementes 17 des Vorsatzgehäuses 1, so daß sich ein an das Vorsatzgehäuse 1 angekuppelter Antriebsadapter nicht selbsttätig von diesem lösen kann.

Dadurch, daß die Typengehäuseteile 23 und 24 die gleichen Kupplungsgegenelemente 28, 29, 30 un 31 aufweisen, wie der Standardgehäuseteil 22, sind diese Typengehäuseteile 23 und 24 auch jeweils direkt mit den Kupplungselementen 17 bis 20 des Vorsatzgehäuses 1 in Eingriff bringbar. Das bedeutet, daß statt der standardisierten Kupplungswelle 9 mit dem ebenfalls standardisierten Wellenkupplungsteil 10 z.B. eine mit einem Gewindeansatz 8 versehene Sechskantwelle 51 unmittelbar in die Gewindenabe 6 der Preßwalze 7 eingesetzt und das Vorsatzgehäuse 1 mit dem Typengehäuseteil 24 versehen werden kann. Desgleichen ist es auch möglich, eine Kupplungswelle 52, die ebenfalls mit einem Gewindeansatz 8, am gegenüberliegenden Ende aber mit einer eine Außenverzahnung 37 aufweisenden Hohlnabe 36' versehen ist statt der Kupplungswelle 9 zu verwenden und diese zusammen mit dem direkt mit den Kupplungselementen 17 bis 20 des Vorsatzgehäuses 1 in Eingriff gebrachten Typengehäuseteils 23 als Antriebsadapter zu verwenden. Diese zuletzt genannte Verwendungsart der Typengehäuseteile 23 und 24 mit den Kupplungswellen 52 bzw. 51 ist vor allem für den Fall vorgesehen, daß Küchenmaschinen-Hersteller bzw. die Hersteller von typenspezifischen Antriebsaggregaten für ihre Produkte passende Vorsatzgeräte beim Vorsatzgerätehersteller beziehen wollen.

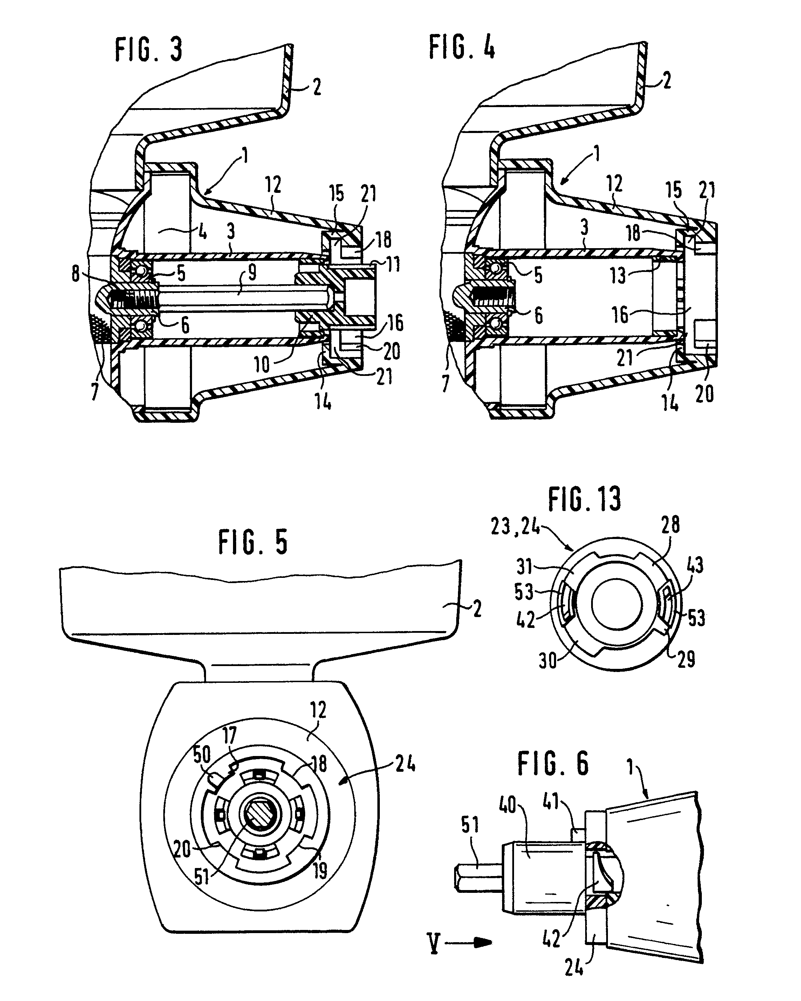

In Fig. 4 ist das Vorsatzgerät ohne die Kupplungswelle 9 mit dem Kupplungsteil 10 dargestellt, um diese Möglichkeit anzudeuten.

Die Verwendung der zusammengebauten im wesentlichen dreiteiligen Antriebsadapter mit den unterschiedlichen Typengehäuseteilen 23 und 24, sowie mit den unterschiedlichen Wellenadaptern 25 und 26 werden immer dann verwendet, wenn ein Vorsatzgehäuse mit standardisierten Kupplungselementen 17 bis 20 an eine mit anderen Kupplungsgegenelementen versehene Küchenmaschine oder deren Antriebsaggregat angeschlossen werden soll.

In den Fig. 5 und 6 ist ein Ausführungsbeispiel dargestellt, bei dem die in der Fig. 7 dargestellten Adapterteile, nämlich die Kupplungswelle 51 und der Typengehäuseteil 24 in der beschriebenen Weise unmittelbar an das Vorsatzgehäuse 1 angebaut sind.

**Patentansprüche**

1. Antriebsadapter zum Ankuppeln eines mit einem standardisierten Wellenkupplungsteil versehenen Vorsatzgerätes, dessen Vorsatzgehäuse mit ebenfalls standardisierten Kupplungselementen versehen ist, an Antriebsaggregate von Küchenmaschinen od. dgl., die jeweils dazu unterschiedliche, typenspezifische Wellenkupplungsteile und Kupplungsgegenelemente am Antriebsgehäuse aufweisen, gekennzeichnet durch zwei in axialer Richtung zu einem Adaptergehäuse (44) zusammenfügbare Gehäuseteile, nämlich ein Standardgehäuseteil (22) und ein Typengehäuseteil (23, 24), die beide jeweils auf der einen Axialseite mit Kupplungsgegenelementen (28, 29, 30, 31) versehen sind, welche mit den standardisierten Kupplungselementen (17, 18, 19, 20) des Vorsatzgehäuses (1) formschlüssig in Eingriff bringbar sind, wobei der Standardgehäuseteil auf der axialen Gegenseite Kupplungselemente (17, 18, 19, 20) aufweist, die mit den standardisierten Kupplungselementen (17, 18, 19, 20) des Vorsatzgehäuses (1) übereinstimmen, und wobei der Typengehäuseteil (23, 24) auf der axialen Gegenseite Kupplungselemente (39, 40) aufweist, die mit den typenspezifischen Kupplungsgegenelementen eines Antriebsaggregats in Eingriff bringbar sind und wobei ferner im Adaptergehäuse (44) ein Wellenadapter (25, 26) mit passenden Kupplungs- und Gegenkupplungsteilen (34, 37, 38) drehbar gelagert ist.

2. Antriebsadapter nach Anspruch 1, dadurch gekennzeichnet, daß einem Standardgehäuseteil (22) mehrere Typengehäuseteile (23, 24) mit unterschiedlichen typenspezifischen Kupplungselementen zugeordnet sind.

3. Antriebsadapter nach Anspruch 1 oder 2, dadurch gekennzeichnet, daß die Typengehäuseteile (23, 24) jeweils mit Riegelelementen (42, 43) versehen sind, die im Eingriff mit den standardisierten Kupplungselementen (17, 18, 19, 20) des Vorsatzgerätes (1) oder eines Standardgehäuseteils (22) eine unlösbare Verbindung ergeben.

4. Antriebsadapter nach Anspruch 3, dadurch gekennzeichnet, daß die Riegelelemente der Typengehäuseteile (23, 24) aus axial federnden, in Ausnehmungen (53) der Gehäusewand angeordneten Sperrzungen (42, 43) bestehen, welche Radialvorsprünge, insbesondere die Kupplungselemente (17 bis 20) des Vorsatzgehäuses bzw. des Standardgehäuses hintergreifen.

5. Antriebsadapter nach einem der Ansprüche 1 bis 3, dadurch gekennzeichnet, daß der Standardgehäuseteil (22) mit einem manuell lösbaren Sperriegel (47) versehen ist, der mit den standardisierten Kupplungselementen (17 bis 20) des Vorsatzgehäuses (1) sichernd in Eingriff bringbar ist.

6. Antriebsadapter nach Anspruch 5, dadurch gekennzeichnet, daß der Sperriegel (42) aus einem in einer axialen Ausnehmung (45) einer Ringwand (46) des Typengehäuseteils (23, 24) axial federnd in eine stirnseitige Ausnehmung (50) des Vorsatzgehäuses (1) formschlüssig drehsichernd eingreift und der mittels eines radial vorspringenden Griffteils (49) betätigbar ist.

7. Antriebsadapter nach einem der Ansprüche 1 bis 6, dadurch gekennzeichnet, daß die Kupplungselemente (17 bis 20) und Kupplungsgegenelemente (28 bis 31) nach Art eines Bajonettverschlusses ausgebildet und zusammenfügbar sind.

8. Antriebsadapter nach einem der Ansprüche 1 bis 7, dadurch gekennzeichnet, daß die Gehäuseteile (22, 23, 24) mit den Kupplungselementen (17 bis 20) bzw. mit den Kupplungsgegenelementen (28 bis 31) und den Riegelelementen (42, 43) jeweils einstückig aus Kunststoff geformt sind.

FIG.1

FIG.2

FIG.14

FIG.15

FIG. 3

FIG. 4

FIG. 5

FIG. 13

FIG. 6

FIG. 7

8    51    XIII

41    24    31    40

FIG. 8

37    8    52    36'    XIII

27    31    23    39

FIG. 9

49    47    22    28    48    35    34    25    37    27    39
17    45    27    33    18    36    XIII    23
30    46    19    31

FIG.10

49    47    22    48    35    34    26    27    24    41
17    45    27    33    18    XIII    38    31    40
30    32    46    19

FIG.11    FIG.12

49    44    41    40    49    53    43    17
47    28    XII    28    29
27    42    38    35    38
30    20    31    30
24    22